Europäisches Patentamt

European Patent Office

Office européen des brevets

(19)

(11) Publication number: **0 241 310 B1**

(12) # EUROPEAN PATENT SPECIFICATION

(45) Date of publication of patent specification: **21.11.91**  (51) Int. Cl.⁵: **B01J  38/00**

(21) Application number: **87303168.6**

(22) Date of filing: **10.04.87**

---

(54) Method for the dry regeneration of a catalyst.

---

(30) Priority: **11.04.86 JP 83587/86**

(43) Date of publication of application:
**14.10.87 Bulletin  87/42**

(45) Publication of the grant of the patent:
**21.11.91 Bulletin  91/47**

(84) Designated Contracting States:
**AT BE CH DE FR GB IT LI NL**

(56) References cited:
**EP-A- 0 172 396**
**EP-A- 0 203 028**
**EP-A- 0 212 043**
**FR-A- 2 133 859**
**FR-A- 2 325 421**

(73) Proprietor: **KAWASAKI JUKOGYO KABUSHIKI KAISHA**
**1-1 Higashikawasaki-cho 3-chome**
**Chuo-ku Kobe-shi Hyogo-ken(JP)**

(72) Inventor: **Makoto, Yanai**
**335-19 Shimizu**
**Uozumi-cho Akashi 674(JP)**
Inventor: **Yoshiro, Ueshima**
**2-2-15 Higashiochiai**
**Suma-ku Kobe 654(JP)**
Inventor: **Shuichi, Tanimoto**
**3-11-3-303 Minamigoya**
**Kita-ku Kobe 651-11(JP)**
Inventor: **Noriaki, Imamura**
**1-10-2 Koeidai**
**Kita-ku Kobe 651-11(JP)**

(74) Representative: **Hayward, Denis Edward Peter et al**
**Lloyd Wise, Tregear & Co. Norman House**
**105-109 Strand**
**London WC2R 0AE(GB)**

## Description

This invention relates to a highly efficient method for the dry regeneration of a catalyst whose performance has decreased (hereafter deteriorated catalyst) through use in a dry denitration device or other gas processing device, wherein the deteriorated catalyst is regenerated by using an abrasive material to grind the surfaces of the catalyst and thus grind off any foreign matter adhered to the catalyst surfaces, together with a part of the catalyst.

With very few exceptions, the method of exhaust gas denitration used at electric power plants and other stationary release sources is ammonia catalytic selective reduction (hereafter referred to as dry denitration) using a catalyst. Dry denitration first began to be used in commercial facilities around 1973, and its range of applicability has steadily increased, centering mainly on boilers using such fuel as gas and heavy oil, and in 1980 it also began to be used for treatment of the exhaust gas from coal-burning boilers.

Unlike other types of industrial-use catalysts, because dry denitration catalysts are used for the treatment of exhaust gases having irregular properties and containing soot, it is often difficult to adjust the operating conditions and conditions under which the catalyst is used for the purpose of preventing the deterioration of the catalyst and maintaining its durability. Thus, since 1980, there has been considerable research done in order to identify which of the indefinite yet presumed conditions contribute to the deterioration of the catalyst and to develop measures whereby its durability could be improved.

At that time, the presumed causes of catalyst deterioration included: (a) components of the catalyst such as $Al_2O_3$ or $Fe_2O_3$ are converted into sulfates by the $SO_X$ in the exhaust gas, thus making a loss of the catalytic function; (b) K, Na, Li, or other basic alkaline elements in the soot cause a loss of the catalytic function; (c) masking or blinding of the catalyst surfaces by particles of soot, tar, etc.; (d) ammonia compounds such as $NH_4HSO_3$ are formed inside the micro pores in the catalyst by the $NH_3$ introduced as a reagent of the dry denitration reaction and the $SO_X$ in the exhaust gas, thus causing a loss of the catalytic function; and (e) heat denaturation of the catalyst.

When gas is burned as the fuel, because there is almost no soot or $SO_X$ in the exhaust gas, there are no factors for deterioration other than the heat denaturation of the catalyst. On the other hand, when oil is burned as the fuel, the exhaust gas may contain relatively large amounts of $SO_3$, so factors (b) and (d) above can be considered the leading causes of deterioration.

In addition, of the causes of deterioration listed above, concerning factor (a), since around 1975, in place of the catalysts of the past which consisted mainly of $Al_2O_3$, $Fe_2O_3$, etc., catalysts using $TiO_2$ as a carrier came into practical use, thus greatly increasing the durability of the catalyst with respect to $SO_X$, and subsequently making possible the application of dry denitration in the treatment of exhaust gas containing $SO_X$. Although concern regarding factors (b) through (e) has not been completely eliminated, with catalyst durability tests showing a durability of at least one year for gas-burning and oil-burning boilers, practically has advanced considerably.

As dry denitration has progressed for gas-burning and oil-burning boilers, research has also been conducted on methods for the regeneration of the deteriorated catalysts. For example, regeneration methods in which the deteriorated catalyst is washed in an alkaline aqueous solution can be seen in Japanese Patent Provisional Publications Showa 52-35786 and Showa 52-63891 and methods for the regeneration of a deteriorated catalyst by treating it with heat are presented in Japanese Patent Provisional Publications Showa 52-26393 and Showa 52-26394.

In addition, as described in Japanese Patent Provisional Publication Shows 54-61087, a method has also been proposed for the rotation polishing of plate-shaped catalysts, in which the dust adhered to the surfaces of the catalysts is removed by securing a large number of plate-shaped catalysts inside a reactor which revolves around a horizontal axis, placing particle-shaped solids such as sand or alumina inside the reactor, and then spinning the reactor.

Although the catalyst regeneration methods mentioned above which use washing are also effective in removing the particles of soot, etc., which have adhered to the surfaces of the catalyst, they are primarily judged to be effective in washing out poisonous substances such as K, Na, and $NH_4HSO_4$ which have permeated into the catalyst. Furthermore, heat treatment, using operation within a certain fixed temperature, is effective in dispersing $NH_4HSO_4$ and other ammonia compounds which have accumulated inside the catalyst.

In addition, for plate-shaped catalysts consisting of parallel metal screens filled with catalyst pellets, the method described in Japanese Patent Provisional Publication Showa 54-61087 has the objective of flaking off dust which has adhered and accumulated between the pellets in the surface layers of the plate-shaped catalysts, and it is effective in both the contact of the gas with the catalyst pellets which make up the catalyst, and in the regeneration reactivation of the catalyst remnants.

2

After years of operating dry denitration devices for equipment burning gas and all but the lowest quality of oil as fuel, it has become clear that the actual catalyst deterioration is less than was originally feared. Currently it is common for catalysts to not require replacement or replenishment for six years or more or operation. Because the exhaust gas from coal-burning equipment contains large amounts of soot, there were many technological problems to be solved, such as measures to prevent abrasion or clogging of the catalyst, and thus practical application did not come until 1980, some time later than for oil-burning facilities.

In tests performed by the inventors, it was clear that the deterioration with the passage of time of denitration catalysts used in the treatment of coal exhaust gases was considerably greater than for when oil was used as a fuel. The results of analyses of the catalyst before and after use performed in order to clearly identify the causes of this deterioration showed that, in most cases, there were no substantial changes in the content of basic elements such as K and Na which have a high potential for deterioration, nor was the change in the sulfur content, which would indicate the formation of $NH_4HSO_4$ inside the micro pores of the catalyst, sufficiently to explain the deterioration.

Although the amount of K, Na, and other alkaline basic elements contained in coal exhaust gas soot (fly ash) is larger than for when oil is burned as a fuel, because the amount of $SO_3$ is relatively small in comparison to the amount of soot, and because the K, Na, and other basic elements are fused together with such oxides as silica and alumina and enclosed in a glass-like insoluble state, it can be assumed that, with very little reaction, the function as a catalyst poison is slight. In the fly ash elution tests carried out by the inventors, there was little solution of K, Na, etc., in an aqueous solution, thus supporting this theory.

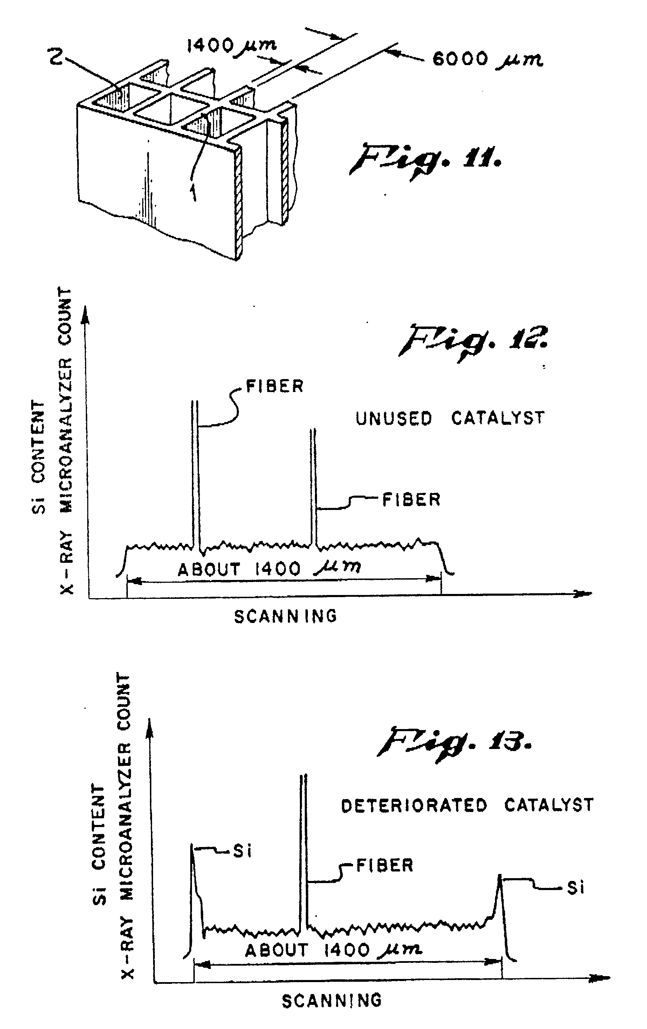

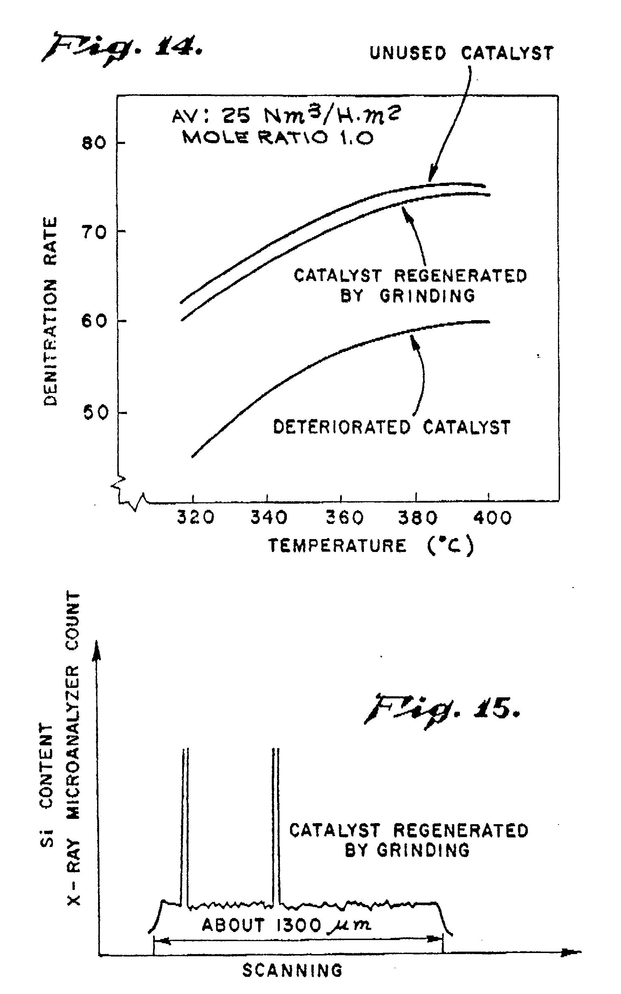

Fig. 10 shows one example of the configuration of a catalyst used for the denitration treatment of coal or oil exhaust gas. 1 indicates the catalyst, and 2 indicates the catalyst holes. When an x-ray microanalyzer was used to analyze the cross section of a catalyst (for coal-burning facilities, the thicknesses most commonly used range from 0.8 to 1.8 mm) before and after using it for coal exhaust gas treatment, the cross-sectional distributions of Si shown in Fig. 12 and 13 were obtained. Concerning the catalyst used for this experiment, as shown in Fig. 11, the thickness of the catalyst 1 was 1400 $\mu$m (1.4 mm), and the catalyst holes 2 measured 6000 $\mu$m (6 mm) x 6000 $\mu$m (6 mm).

As shown in Fig. 12, for the unused catalyst, although peaks in the x-ray microanalyzer count appear at irregular positions inside the catalyst as a result of the detection of Si contained in the inorganic fiber used to maintain the strength of the catalyst, all other parts are flat. On the other hand, as shown in Fig. 13, for the deteriorated catalyst which has been used for the treatment of coal exhaust gas, an increase in the Si content appears (the projecting parts at both ends) for the surface layers of the catalyst, which have come in contact with the exhaust gas.

When the same x-ray microanalyzer was used to investigate the distribution of Na, K, Ca, and other basic elements before and after the use of the catalyst, an increase in the Ca content was observed for the areas around the surface layers of the deteriorated catalyst, just as the Si. In investigations of the Si and Ca distributions in several varieties of catalyst samples with different origins, increases in the Si and Ca content of varying degrees were observed in the deteriorated catalysts in the areas near the surface layers.

Although a close quantitative correlation between the degree of deterioration of the catalyst and the degree of increase of the Si or Ca content in the surface layers of the catalyst is as yet unconfirmed, a relationship was observed between the size of the microanalyzer count, which is an indicator of the content of Si, Ca, etc., and the degree of deterioration of the catalyst. For catalysts with severe deterioration, the cross-sectional distribution charts for Si and Ca generally featured large peaks in the areas of the surface layers.

In almost all of the catalysts investigated thus far, the increase Si and Ca contents in the deteriorated catalysts were observed within a depth of 100 $\mu$m or less from the surface. At the present time, it is not yet clear whether the deterioration of the catalyst results from the increased amount Si or Ca combining with the components of the catalysts, or as a results of the clogging of the catalyst micro pores by particles containing Si or Ca.

In this connection, when silicone having as its main component dimethyl siloxane, which has a high potential for decomposition under exposure to high temperatures and combining with the components of the catalyst, was placed into a container together with a catalyst for exposing at a temperature of approximately 400°C, the increase in Si was observed not only in the surface layers, but throughout the entire catalyst, thus exhibiting a marked difference from the increase in Si caused by coal exhaust gas. In this case, results different from those for a catalyst deteriorated by coal exhaust gas were obtained even for the properties of the side reactions in the catalyst. From this, it can be hypothesized that the increase of Si and Ca caused by coal exhaust gas results in the clogging of the micro pores in the catalyst.

However, because, as evaluated from the reaction speed and the size of the micro pores of the catalysts in practical use, the effective depth (the depth to which the catalyst contributes to the denitration

3

reaction) of the catalyst is estimated to be approximately 100 $\mu$m, whether it is the result of chemical poison or clogging, any increase in the amount of Si or Ca, even if it is limited to within a depth of 100 $\mu$m, can be judged sufficient to explain the deterioration of the catalyst. Furthermore, concerning the other causes of deterioration, as mentioned earlier, because not changes sufficient to explain the deterioration occur, it is believed that the increase of Si and Ca in the surface layers of the catalyst are the greatest cause of deterioration in denitration catalysts used in the treatment of coal exhaust gas. When considered from the view point of the regeneration of deteriorated catalysts, the fact that deterioration of the catalyst is caused, at least in the end result, by changes which occur in the area extending from the surface layers to a fixed depth is extremely meaningful.

The inventors attempted the regeneration of deteriorated catalysts which had been used to treat coal exhaust gas by using the heating methods and washing methods of prior art described earlier, but none of these methods provided sufficient results. The heating method, especially, was completely ineffective, with no changes in the cross-sectional distribution of Si and Ca following heat treatment (catalyst exposed for three hours to hot air current of 430 $^\circ$C).

In addition, when the washing method was used, although some effectiveness in removing the Si and Ca was observed, there were problems involving the washing out of some of the effective components of the catalyst and concerning the strength of the catalyst after it had been washed. In order to prevent this washing out of the effective components of the catalyst, an alkaline solution can be used, and there is also a method of restoring the effective components after washing, but in either case the treatment becomes complicated. Also, in order to remove a meaningful amount of Si and Ca, the catalyst must be washed for an extended length of time, even supposing that supplementary means such as ultrasonic waves are used. Thus, washing has a considerable effect on the strength of the catalyst, and practical application is judged to be difficult.

In addition, in the method described in Japanese Patent Provisional Publication Showa 54-61087, particulate solids are caused to collide with plate-shaped catalyst elements inside a spinning reactor so that the dust adhered to the surfaces of the catalysts is flaked off by the resulting friction, and there is no suggestion of the technological idea of grinding the surfaces of the catalysts. Furthermore, the practical application of the structure for spinning the reactor is extremely difficult, and, especially when the catalysts have been used to treat a gas which has considerable soot loading, such as coal exhaust gas does, there is the strong possibility that the reactor could become clogged.

In EP-A-0203028, there is a proposal to grind catalyst surfaces by means of abrasive particles by placing the catalyst over a fluidised bed of such particles. Thus, the particles that perform the abrasive action upon the catalyst surfaces are caused to flow over the catalyst surfaces by the effect of rising from and falling back into the fluidised bed, which is like that such as is well known when used for the purpose of particle separation by the process of elutriation.

The vessel in which the treatment takes place has at the top a single central outlet valve, but the fluidised bed material and the material that is removed from the catalyst surfaces by the abrasive action both remain in the treatment vessel, air alone being discharged from the air outlet valve.

Focusing on the determination by the present inventors that the deterioration of a catalyst in the treatment of coal exhaust gas generally results from the deposition of particles of Si, Ca, etc., in the regions of the surface layers of the catalyst, and that this particle deposition is limited to a depth of approximately 100 $\mu$m, at most within 200 $\mu$m, from the catalyst surface, the present invention now arises. It is an object of this invention to achieve a method whereby catalysts can, with no practical reduction of the strength of the catalysts, be efficiently regenerated by grinding and removing the surface of the catalysts.

According to the present invention, there is provided a method for the dry regeneration of a catalyst consisting of elements having the cross-section of a lattice or grid, or in the form of a large number of plates, especially a catalyst used in the treatment of flue gases from the burning of solid fuels, in which method the surfaces of the catalyst are ground or abraded to remove a contaminated surface layer, characterised in that a substantially uniform surface layer of the catalyst is removed by a treatment during which the removed material is continually flowing away out of the treatment zone.

The invention further provides apparatus for the performance of this method.

Embodiments of the invention will now be described in more detail and by way of example, with reference to the accompanying drawings in which:

Fig. 1 is an explanatory diagram illustrating one example of a method according to this invention for the dry regeneration of a catalyst.

Fig. 2 is an explanatory diagram illustrating another example of the method of this invention.

Figs. 3 to 5 are perspective views each of one example of a catalyst edge protection grid that may be used in the performance of this invention.

Fig. 6 is a flowchart showing the catalyst regeneration process using the air-current grinding method of a first embodiment of this invention.

Fig. 7 is a flowchart showing the catalyst regeneration process using the abrasive material gravity flow method of a second embodiment of this invention.

Fig. 8 is an explanatory diagram showing the catalyst regeneration process using the brush polishing method of a third embodiment of this invention.

Fig. 9 is an expanded perspective view of the essential part of Fig. 8.

Fig. 10 is a perspective view showing one example of the configuration of catalyst for which the method of this invention can be used.

Fig. 11 is an enlargement of a part of Fig. 10.

Fig. 12 is a graph showing the Si content of an unused catalyst.

Fig. 13 is a graph showing the Si content of a deteriorated catalyst.

Fig. 14 is a graph showing one example of the test results for catalyst regeneration using grinding.

Fig. 15 is an Si distribution graph of the results when an x-ray microanalyser was used to analyse the cross section of a catalyst regenerated by grinding.

There are no special limitations on the abrasive material used in the method of this invention, and some possibilities include silica sand, steel balls, ceramic particles, brushes, sandpaper, files, etc. As long as the material has a hardness exceeding that of the material of the catalyst, anything can be used. There are also no limitations on the shape of the abrasive material.

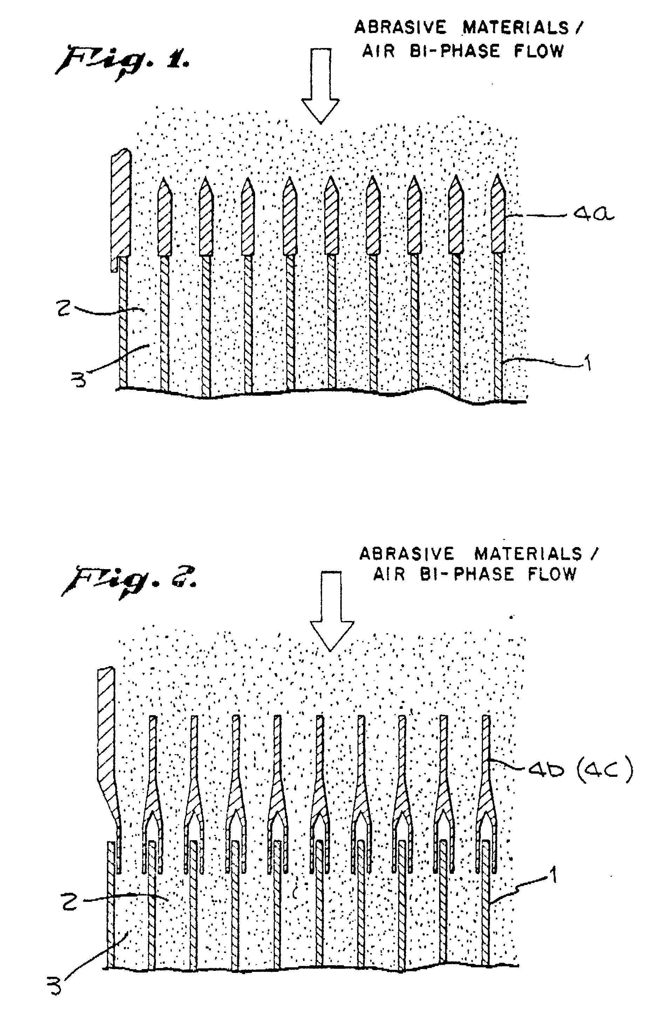

If the abrasive material is particulate, as in Figs. 1 and 2, the abrasive material 3 can be caused to flow through the interiors of the catalyst grid holes 2 on a current of air, or the abrasive material 3 can be caused to flow through the interiors of the catalyst holes by its own weight. Also, if the abrasive material is caused to flow by its own weight, it is preferred that vibration be added in order to prevent clogging, etc.

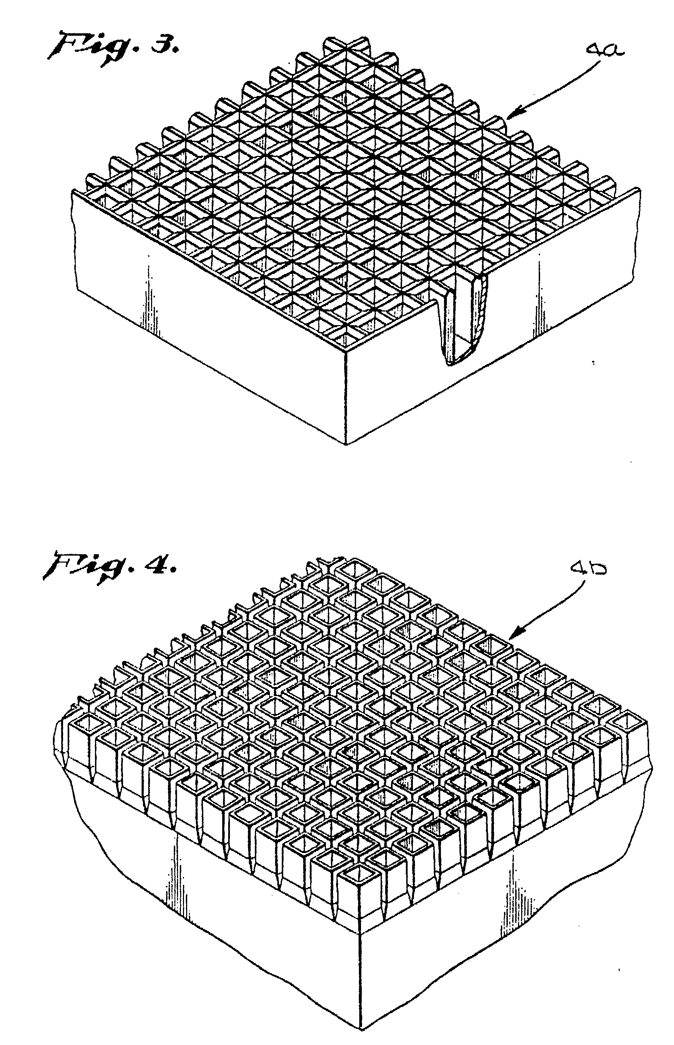

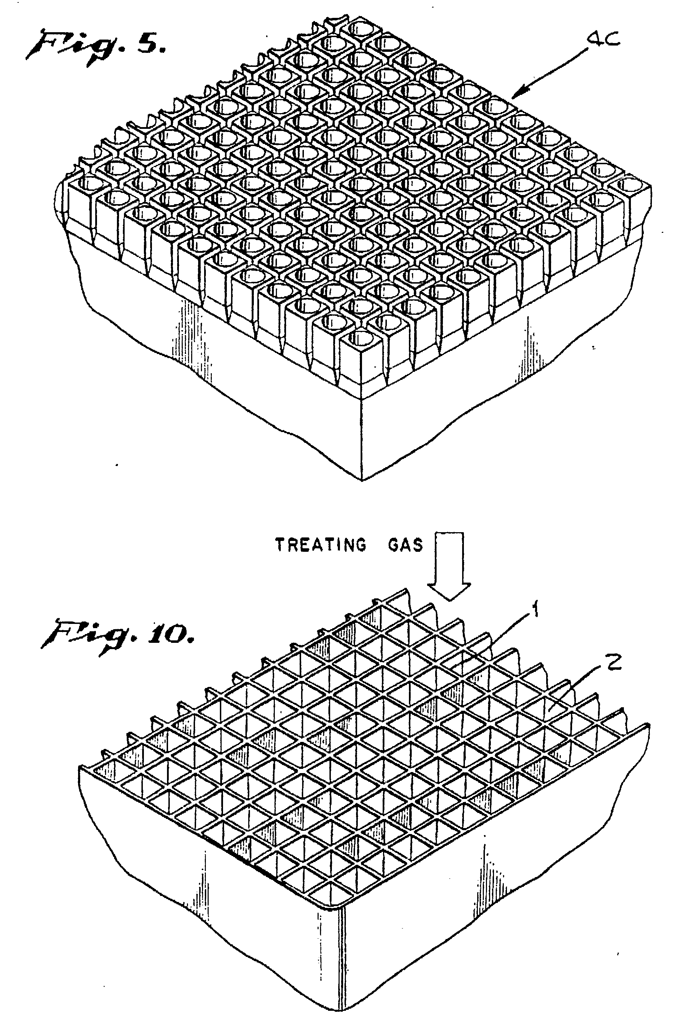

In addition, in order to protect the top of the catalyst 1, a catalyst edge protection grid is placed on top of the catalyst 1. The catalyst edge protection grid 4a shown in Fig. 1 is the catalyst edge protection grid shown in Fig. 3 which has been fitted into place on the catalyst. The catalyst edge protection grid 4b and 4c shown in Fig. 2 is the catalyst edge protection grid shown in Fig. 4 or Fig. 5 which has been fitted into place on the catalyst.

In addition to the grid shape shown in Fig. 10, the catalyst can be formed in the shape of a large number of tubes, a honeycomb, or a large number of plates arranged in parallel. The catalyst edge protection grid is fabricated to match the shape of the catalyst so that it can be fitted onto the catalyst.

The following is an explanation of a test example and the embodiments of the invention.

Tests Examples

Fig. 14 shows an example of the results obtained through tests performed by the inventors. The test specimen catalyst was a deteriorated catalyst which had been used in the treatment of coal exhaust gas. From this deteriorated catalyst, which was formed in the shape of a grid with a hole aperture of 6 mm, a catalyst thickness of 1.4 mm, a catalyst cross section of 150 mm, and a length of 500 mm, a piece was cut to a size convenient for the test, with a cross section of 15 mm square. For the abrasive material, a piece of commercially available sandpaper was attached to a square brass rod measuring 900 mm in length, 4 mm square in section.

As shown in Fig. 14, the denitration rate on the ground catalyst had recovered to a level approaching that of an unused catalyst, thus demonstrating the considerable effectiveness in catalyst regeneration achieved by grinding. Note that, as estimated by comparing the weight of the catalyst before and after grinding, the average thickness removed by the grinding process was 70 $\mu$m. Also, the measurement of the denitration rate was performed at an AV (area velocity) of 25 $Nm^3/H.m^2$ and a mole ratio of 1.0.

After the denitration rate was measured, a microanalyzer was used to analyze the cross section of the catalyst regenerated by grinding, and the Si distribution shown in Fig. 15 was obtained.

Although there are no limitations on the grinding method used for the regeneration of a catalyst by grinding, the processing capacity of the grinding method described above, where sandpaper was attached to a metal rod, has a low processing efficiency and cannot necessarily be said to be well suited for practical application. In the practical application of the grinding method of catalyst regeneration, it is preferred that ways to improve processing efficiency be utilized.

As means for grinding the surface of steel and other materials, in addition to sandpaper and files, blast treatment using sand, steel balls, etc., is also well known. Also, wire brushes are used for lighter polishing and for removing foreign matter from surfaces. Because blast treatment uses small particles and air or some other fluid, it is well suited for large-volume processing and for improving processing efficiency. In addition, methods using wire brushes or some other type of brushes offer considerable possibilities for achieving a greater processing efficiency that for sandpaper.

However, from the viewpoint of catalyst regeneration effectiveness, it is preferred that all the surfaces of the catalyst which have come in contact with the exhaust gas be ground uniformly. Localized grinding has less catalyst regeneration effectiveness and, moreover, is not desirable for reasons concerning the strength of the catalyst.

The following embodiments 1 to 3 are example of the methods investigated by the inventors selected with consideration for maintaining regeneration effectiveness through uniform grinding and for improving processing efficiency.

EMBODIMENT 1

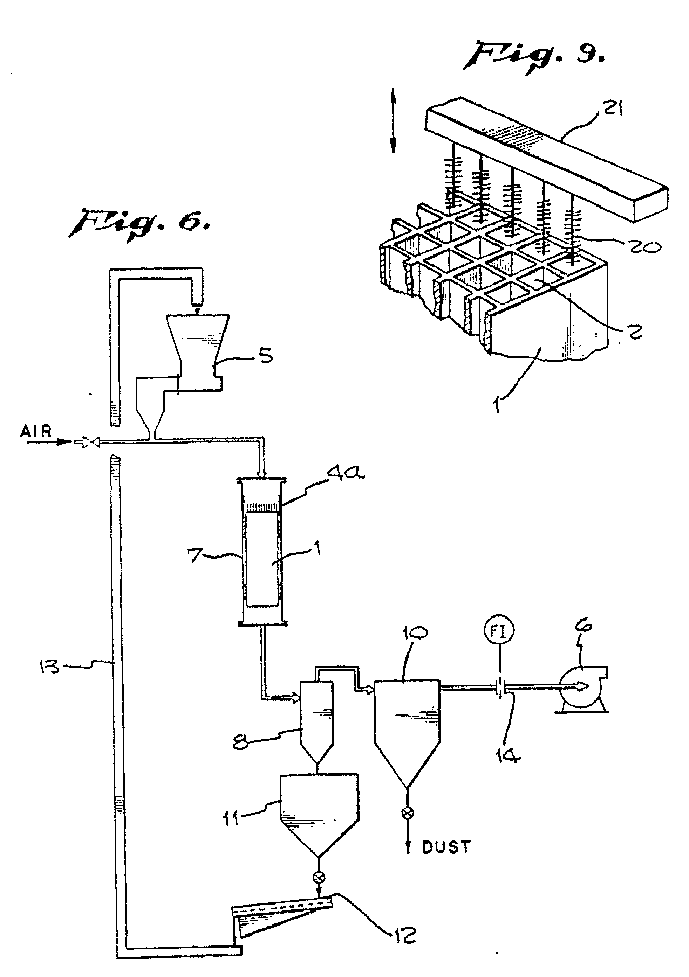

A grid-shaped titanium-based catalyst (hole aperture of approximately 6 mm; inner wall thickness of approximately 1.4 mm) containing 0.7% by weight of $V_2O_5$ and 9% by weight of $WO_3$, and measuring approximately 500 mm in length with a cross section of 150 mm square, which had been used in the denitration device of a coal-burning boiler, was used as a test specimen. Crushed silica sand having an average particle diameter of 125 $\mu$m was used as the abrasive material, and was caused to flow through the interior of the catalyst on a current of air flowing at a speed of 30 m per second with respect to the cross section of the catalyst, thus grinding the surfaces of the catalyst in order to perform catalyst regeneration. At this time, the catalyst edge protection grid 4a shown in Fig. 3 was used in order to prevent the wear of the edges of the catalyst. Fig. 6 shows the process flow.

The abrasive material was supplied at a rate of 4 kg per minute by a fixed-amount supply unit 5, the air output of the blower 6 was 40 $m^3$ per minute, and the amount of time required for processing was 30 minutes.

The catalyst 1 and the catalyst edge protection grid 4a were placed inside a sealed container 7, the blower 6 was connected to the bottom of this sealed container 7 via a cyclone 8 and a filter 10, and the silica sand was introduced from the top of the sealed container 7 on a current of air.

The silica sand which has ground the surfaces of the catalyst flows into the cyclone together with the grinding dust and the air. Here, the silica sand is separated together with the grinding dust and temporarily stored in the abrasive material hopper 11. Next, a dust separator 12 separated the silica sand and the grinding dust, and the silica sand is circulated by a conveyor 13 back to the fixed-amount supply unit 5 in order to be used again.

Meanwhile, the air, which contains fine particles of grinding dust, is sent from the cyclone 8 to the filter 10, where the fine particles of grinding dust are separated. 14 is a flow meter.

As shown in the following table, the regeneration processing greatly restored the denitration rate, and although the grinding caused a slight loss of compression strength, it was clear that this presented no problems for practical application.

EMBODIMENT 2

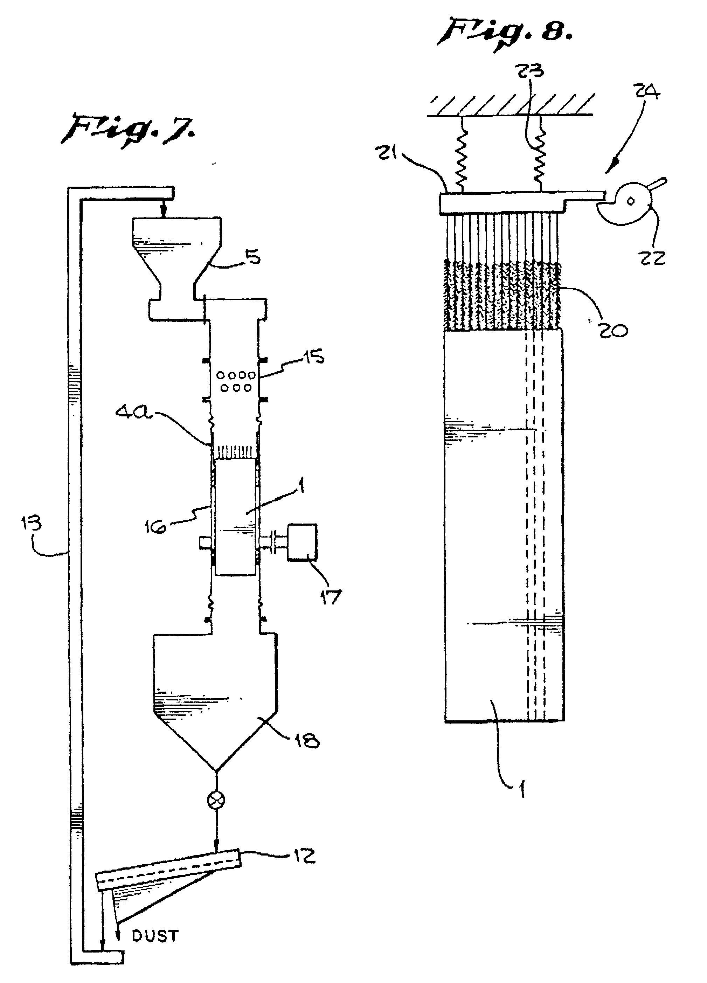

The same catalyst test specimen as for Embodiment 1 was used, and catalyst regeneration was performed by causing the abrasive material to flow through the catalyst by its own weight. The processing flow has as shown in Fig. 7. Crushed silica sand having an average particle diameter of 840 $\mu$m was used as the abrasive material, and it was supplied at a rate of 6 kg per minute by the fixed-amount supply unit 5.

The silica sand flowed through the catalyst holes by its own weight. In order to scatter the silica sand uniformly, a distributor 15 consisting of a large number of rods was provided at the top of the catalyst, and a vibrator 17 was mounted to the container 16 in which the catalyst 1 was placed in order to prevent the abrasive material from clogging the catalyst holes. As for Embodiment 1, the catalyst edge protection grid 4a shown in Fig. 3 was used in order to prevent the edges of the catalyst from becoming worn.

The silica sand which has ground the surfaces of the catalyst falls into a hopper 18 together with the grinding dust, and the dust separator 12 separates the silica sand and the grinding dust. The silica sand is circulated by a conveyor 13 back to the fixed-amount supply unit 5 in order to be used again. After four hours of this silica sand flow treatment, the denitration rate and compression strength of the catalyst were measure. The results are shown in the following table.

EMBODIMENT 3

The same catalyst test specimen as for Embodiment 1 was used, and catalyst regeneration was

6

performed by using a brush polishing method. The processing procedures are shown in Figs. 8 and 9.

The polishing brushes 20 which were used were commercially available stainless steel brushes measuring 10 mm in diameter and 400 mm in length which had been cut to a cross section 7 mm square. The diameter of the brush wires was 0.08 mm. The cut brushes were mounted onto a brush mounting base 21, 20 in a row to correspond to the number of holes in one side of the test specimen catalyst.

The brush mounting base 21 was moved up and down at a fixed stroke by a cam 22. 23 is a spring, and the spring 23 and the cam 22 form a reciprocating motion device 24. The brush mounting base 21 was moved up and down at a stroke of 140 mm with respect to the catalyst 1, which was held stationary, thus polishing the insides of the catalyst holes 2.

The catalyst holes 2 were processed one row at a time, and the processing time for each row was one minute. Thus the amount of time required to process one catalyst was 20 minutes. The denitration rate and compression strength of the regenerated catalyst were measured, and the results are shown in the following table.

| | Denitration rate (%) AV:25 | | | Compression strength (kg/cm$^2$) | |
|---|---|---|---|---|---|
| Catalyst | 320°C | 350°C | 380°C | Axial direction | Lateral direction |
| Unused | 66.8 | 73.8 | 76.2 | 49.2 | 16.8 |
| Deteriorated | 52.5 | 60.8 | 63.3 | 64.0 | 19.7 |
| Regenerated Embodiment 1 | 63.3 | 71.1 | 73.6 | 50.2 | 14.5 |
| Regenerated Embodiment 2 | 61.3 | 69.3 | 71.7 | 52.6 | 15.4 |
| Regenerated Embodiment 3 | 66.0 | 73.0 | 75.5 | 48.5 | 15.7 |

As shown above, Embodiments 1 and 2 are examples of methods suitable for catalyst regeneration using blast processing.

Although this invention relates to the regeneration of a catalyst by grinding and removing the surface of the catalyst, during use in a denitration device used to treat (high-dust method) coal exhaust gas, the catalyst is constantly being subjected to grinding action by the fly ash, even though it is a very slight amount at a time. As shown in Fig. 10, the grinding by the fly ash occurs at the edges of the catalyst and, with some small exceptions, is not observed at the sides of the catalyst. This is because the change in momentum resulting from the collision of each individual particle of fly ash with the catalyst is greatest at the edges and smallest at the sides.

In order to make possible the regeneration of a catalyst by blast processing, the momentum of the sand, steel balls, ceramic particles, or other abrasive material must be greater than that of the fly ash in order to ensure that the sides are ground. Although this can be achieved by such methods as using coarser particles for the abrasive material, increasing the density of the abrasive material, increasing the speed at which the abrasive material flows through the catalyst holes, etc., because, in any case, the change in the momentum of the abrasive material will be large at the edges of the catalyst than at the sides, a protective device is needed to prevent the frictional wear of the catalyst edges. In Embodiment 1 and 2, this is accomplished by the mounting of the protective grid on the catalyst edges with which the abrasive material collides.

With the method in Embodiment 1, where the abrasive material is scattered and carried through the catalyst holes by an air current, the smaller the particle size of the abrasive material, the more uniform the effectiveness of the grinding will be. However, when using small-diameter abrasive material, a higher flow speed is needed and more power will be required to drive the blower, so appropriate selection must be made accordingly. Although the abrasive material particle diameter and the flow speed will vary according to the abrasion resistance strength of the catalyst to be regenerated, generally selection can be made from within a range of 20 ~ 1000 μm for the average particle diameter and 15 ~ 60 m/sec for the air current flow speed.

With the method of Embodiment 2, where the abrasive material flows through the catalyst holes by its own weight, there are the advantages that the regeneration processing equipment is simpler, and that no power is required to drive a blower. However, there is the disadvantage that, even if the abrasive material particle diameter is increased, the time required for processing will be longer. In addition, for this gravity-flow method, it is preferred that means for scattering the abrasive material uniformly and means for preventing the abrasive material from clogging the catalyst holes also be included. With the gravity-flow method, although the particle diameter of the abrasive material will vary according to the characteristics of the catalyst, just as for the air-current grinding method, generally the average particle diameter for silica

EP 0 241 310 B1

sand can be selected from within a range of 100 ~ 1500 μm.

With the method of Embodiment 3, where brush polishing is used, because commercially available brushes usually cannot be used as it is, they must be cut to the necessary dimensions. In order to provide each of the individual wires of the brush with frictional strength, it is preferred that the brush core be thin. In addition, because the brush core is thin and the length of the catalyst is usually 400 ~ 1000 mm, is difficult to use the rigidity of the brush core to press the brush against the walls of the catalyst. Methods for pressing the brush against the catalyst walls include (a) stretching the brush core to provide the core with tension and pressing in one direction; and (b) using a brush with a cross-sectional size that is larger than the diameter of the catalyst holes, thus using the flexure of the individual brush wires to uniformly apply frictional force to two or four surfaces simultaneously.

In the inventors' tests, method (b) above provided goods results, and Embodiment 3 uses this method. Although the cross-sectional size of the brush used will vary according to the configuration of the catalyst and the wire diameter and material of the brush, as shown in Embodiment 3, for a catalyst with holes measuring 6 mm square, using a brush with stainless steel (SUS304) wires measuring 0.08 mm in diameter, cutting the brush to an outer diameter of 7 mm square provides good results.

In addition, although it is not used in the embodiment, depending on the characteristics of the brush used and the method of applying reciprocating motion, it may be preferred that the same type of catalyst edge protection grid as used in the blast processing method be mounted on both sides of the catalyst. In Embodiment 3, the explanation dealt with the case where the brushes were inserted into the catalyst holes the full length or nearly the full length of the holes, but it is also possible to polish the surfaces of the catalyst by inserting the brushes only partway into the catalyst holes and lengthening the stroke.

In the embodiments, a grid-shaped catalyst was used as an example and the methods for processing a single catalyst at a time where explained as illustrations, but the principles of the invention are not necessarily limited to these cases. In addition to grid-shaped catalysts, it is also possible to regenerate plate-shaped catalysts using the principles of this invention, and, because multiple catalysts are often stored together in a steel container, it is also possible to either process these catalysts while they remain in the container or to process them without removing them from the reactor.

In addition, using the blast processing method of Embodiments 1 and 2, it is also possible to process the catalysts either individually or to arrange multiple catalysts in a container serially in multiple layers and process them simultaneously, thus shortening the time required for processing and reducing processing costs. Furthermore, although this invention is especially effective in the regeneration of deteriorated catalysts which have been used to treat coal exhaust gas, it is also effective for catalysts which have been used for other kinds of gas treatment. The principles of this invention are the regeneration of a catalyst through a dry grinding method, regardless of the used hysteresis or history of the catalyst.

As explained above, using the method of this invention, when a catalyst which has been performed in the shape of a large number of small tubes, a honeycomb, or a large number of plates becomes deteriorated, by grinding the surfaces of the deteriorated catalyst with an abrasive material it is possible to display an excellent regeneration effectiveness. There is also the additional effectiveness that, because the grinding is performed while the catalyst is in a stationary state, there is little power required, and the equipment is extremely simple.

## Claims

1. A method for the dry regeneration of a catalyst consisting of elements having the cross-section of a lattice or grid, or in the form of a large number of plates, especially a catalyst used in the treatment of flue gases from the burning of solid fuels, in which method the surfaces of the catalyst are ground or abraded to remove a contaminated surface layer, characterised in that a substantially uniform surface layer of the catalyst is removed by a treatment during which the removed material is continually flowing away out of the treatment zone.

2. A method according to Claim 1, wherein the treatment is performed by abrasive particles, e.g. of silica sand, which are continuously caused to flow over the catalyst surfaces in a current of gas, especially air, which current also continuously carries away the removed material.

3. A method according to Claim 1, wherein the treatment is performed by abrasive particles, e.g. of silica sand, which are continuously caused to flow down over the catalyst surfaces by gravity, the gravity effect also continuously carrying away the removed material.

8

4. A method according to Claim 1, wherein the treatment is performed by an abrasive means having a hardness greater than that of the catalyst, especially brushes, the catalyst being so orientated during the treatment that the removed material continuously falls away.

5. A method according to Claim 3, wherein the catalyst is vibrated during the treatment to assist the gravity flow.

6. A method according to any of Claims 2, 3 and 5, wherein the leading edges of the catalyst surfaces that are first struck by the abrasive particles are protected from erosion by placing on them a protective cover or grid.

7. Apparatus for performing the method of Claim 1, characterised by a through-flow vessel (7) to contain the catalyst elements (1) under treatment, supply means (5) providing a supply of abrasive particles, air-moving means (6) to generate an air stream for carrying the abrasive particles to the treatment vessel, flow distribution means (4a) distributing said flow stream evenly over the cross-section of the vessel, and a flow line for conveying the spent air stream containing the abrasive particles and the material removed from the catalyst surfaces away from the treatment vessel to separator means (8) for separating the abrasive particles from the removed material.

8. Apparatus for performing the method of Claim 1, characterised by a vessel (16) to contain the catalyst elements (1) under treatment in an orientation such that abrasive particles supplied at the top of the vessel will descend through the vessel by gravity, treating the catalyst surfaces as they do so, and fall away from the vessel at the bottom mixed with the material removed from the catalyst surfaces, supply means (5) providing a supply of abrasive particles at the top of the vessel, distributing means (15, 4a) above the vessel for distributing the particles evenly over the cross-section of the vessel, vibrator means (17) for vibrating the vessel, and separator means (12) to receive the mixture falling from the bottom of the vessel and separate the abrasive particles from the removed material.

9. Apparatus for performing the method of Claim 1, characterised by a set of brushes (20) individually shaped to abrade the catalyst surfaces and means (24) for reciprocating the brushes in contact with the catalyst surfaces to perform the treatment, in an orientation such that material removed from the catalyst surfaces by the brushes continually falls away from the treatment zone.

**Revendications**

1. Procédé de régénération à sec d'un catalyseur, consistant en des éléments présentant la section transversale d'un treillis ou d'une grille, ou de la forme d'un grand nombre de plaques, spécialement un catalyseur utilisé dans le traitement des gaz d'échappement provenant de la combustion de combustibles solides, procédé dans lequel les surfaces du catalyseur sont érodées ou abrasées pour éliminer une couche superficielle contaminée, caractérisé en ce qu'une couche de surface sensiblement uniforme du catalyseur est enlevée grâce à un traitement, pendant lequel le matériau enlevé est évacué de façon continue de la zone de traitement.

2. Procédé selon la revendication 1, dans lequel le traitement est effectué grâce à des particules abrasives, par exemple su sable siliceux, qui est soumis à un écoulement continu sur les surfaces du catalyseur, dans un courant de gaz, spécialement d'air, courant également continu qui assure l'évacuation du matériau extrait,

3. Procédé selon la revendication 1, dans lequel le traitement est effectué grâce à des particules abrasives, par exemple du sable siliceux, qui est soumis à un écoulement continu sur les surfaces du catalyseur, par l'effet de la pesanteur, l'effet de la pesanteur assurant également l'évacuation continue du matériau extrait.

4. Procédé selon la revendication 1, dans lequel le traitement est effectué grâce à des moyens abrasifs, qui présentent une dureté supérieure à celle du catalyseur, spécialement des brosses, le catalyseur étant orienté, pendant le traitement, de façon telle que le matériau extrait chute de façon continue.

5. Procédé selon la revendication 3, dans lequel le catalyseur est soumis à des vibrations pendant le

9

traitement, pour assister l'écoulement par gravité.

6. Procédé selon l'une quelconque des revendications 2, 3 et 5, dans lequel les bords de tête des surfaces du catalyseur, qui sont les premiers attaqués par les particules abrasives, sont protégés de l'érosion en plaçant sur eux une couverture ou une grille protectrice.

7. Appareil pour mettre en oeuvre le procédé selon la revendication 1, caractérisé par un récipient à écoulement traversant (7), pour contenir les éléments de catalyseur (1) en traitement, un moyen d'amenée (5), produisant une amenée de particules abrasives, un moyen de déplacement d'air (6) pour produire un courant d'air servant à transporter les particules abrasives jusqu'au récipient de traitement, un moyen de répartition de l'écoulement (4a) répartissant régulièrement ledit courant d'écoulement sur la section transversale du récipient, et une conduite d'écoulement, pour transporter le courant d'air fourni, qui contient les particules abrasives et le matériau enlevé des surfaces de catalyseur hors du récipient de traitement, vers des moyens de séparation (8), pour assurer la séparation entre les particules abrasives et la matériau extrait.

8. Appareil pour mettre en oeuvre le procédé selon la revendication 1, caractérisé par un récipient (16), pour contenir les éléments de catalyseur (1) en traitement, suivant une orientation telle que les particules abrasives amenées en partie supérieure du récipient vont descendre dans le récipient par l'effet de la pesanteur, traiter les surfaces de catalyseur lors de leur chute et quitter en tombant le récipient une fois arrivées au fond, mélangées au matériau extrait des surfaces de catalyseur, un moyen d'amenée (5), produisant une amenée de particules abrasives en parie supérieure du récipient, un moyen de répartition (15, 4a) disposé en partie supérieure du récipient, répartissant régulièrement ledit courant d'écoulement sur la section transversale du récipient, un moyen vibratoire (17) pour faire vibrer le récipient, et des moyens de séparation (12), pour recevoir le mélange qui chute du fond du récipient et assurer la séparation entre les particules abrasives et la matériau extrait.

9. Appareil pour mettre en oeuvre le procédé selon la revendication 1, caractérisé par un jeu de brosses (20), conformées individuellement pour produire l'abrasion des surfaces de catalyseur et des moyens pour produire un mouvement alternatif des brosses en contact avec les surfaces de catalyseur, pour effectuer le traitement, suivant une orientation telle que le matériau extrait des surfaces de catalyseur par les brosses est évacué hors de la zone de traitement en tombant de façon continue

**Patentansprüche**

1. Verfahren zur trockenen Regenerierung eines Katalysators, der aus Elementen mit Gitter- oder Netzquerschnitt oder in Form einer großen Anzahl von Platten besteht, insbesondere zur Behandlung von Rauchgas aus der Verbrennung von festen Brennstoffen , wobei die Oberflächen des Katalysators abgerieben oder abgeschliffen werden, um die verunreinigte Oberflächenschicht abzutragen, **dadurch gekennzeichnet,** daß eine im wesentlichen gleichmäßige Oberflächenschicht des Katalysators durch eine Behandlung abgetragen wird, während der das abgetragene Material kontinuierlich aus der Behandlungszone abgeführt wird.

2. Verfahren nach Anspruch 1, **dadurch gekennzeichnet,** daß die Behandlung mittels Schleifpartikel z. B. des Silikasandes durchgeführt wird, welche innerhalb eines Gasstroms , vorzugsweise Luftstroms , kontinuierlich über die Katalysatoroberflächen rieseln, wobei der Strom das abgetragene Material kontinuierlich abführt.

3. Verfahren nach Anspruch 1, **dadurch gkennzeichnet,** daß die Behandlung mittels Schleifpartikel z. B. des Silikasandes durchgeführt wird, welche durch Schwerkraft kontinuierlich über die Katalysatoroberflächen hinunterrieseln, wobei das abgetragene Material durch die Gravitationswirkung kontinuierlich abgeführt wird.

4. Verfahren nach Anspruch 1, **dadurch gekennzeichnet,** daß die Behandlung mittels eines Schleifmittels, vorzugsweise Bürsten, durchgeführt wird, dessen Härte größer als die des Katalysators ist, wobei der Katalysator derart angeordnet ist, daß das abgetragene Material kontinuierlich abgeführt wird.

5. Verfahren nach Anspruch 3, **dadurch gekennzeichnet,** daß der Katalysator während der Behandlung vibriert , um das Abströmen durch Gravitation zu unterstützen.

6. Verfahren nach den Ansprüchen 2, 3 und 5, **dadurch gekennzeichnet ,** daß die vorstehenden Kanten der Katalysatoroberflächen, auf die die Schleifpartikel zuerst aufschlagen, vor dem Verschleiß geschützt werden, indem eine Schutzabdeckung- oder Gitter auf die Kanten aufgesetzt wird.

7. Vorrichtung zur Durchführung des Verfahrens aus Anspruch 1, **dadurch gekennzeichnet,** daß ein Durchlaufbehälter (7) vorgesehen ist, um die Katalysatorelemente (1) während der Behandlung aufzunehmen und daß Zuführmittel (5) zur Zuführung der Schleifpartikel, Luftbewegungseinrichtungen (6) zur Erzeugung eines Luftstromes, der die Schleifpartikel zum Behandlungsbehälter (7) trägt, Strömungsverteilungsmittel (4a ) zur gleichmäßigen Verteilung des Strömungsstrahls über den Querschnitt des Behälters und eine Strömungsleitbahn zur Abführung des ausgebrachten Luftstroms, der die Schleifpartikel und das von den Katalysatoroberflächen abgetragene Material enthält , aus dem Behandlungsbehälter zu einer Abscheideeinrichtung (8) zur Abscheidung der Schleifpartikel vom abgetragenen Material vorgesehen sind.

8. Vorrichtung zur Durchführung des Verfahrens aus Anspruch 1 **dadurch gekennzeichnet,** daß ein Behandlungsbehälter (16) vorgesehen ist, um die Katalysatorelemente (1) während der Behandlung derart ausgerichtet aufzunehmen, daß die Schleifpartikel, die am Kopfende des Behälters eingeführt werden, infolge Gravitationskraft durch den Behälter hinabfallen, Zuführmittel (5) zur Zuführung der Schleifpartikel am Kopfende des Behälters, daß über dem Behälter angeordnete Verteilungsmittel (15, 4a) zur über den Behälterquerschnitt gleichmäßigen Partikelverteilung, Vibratorvorrichtungen (17), um den Behälter zum Schwingen zu bringen und eine Abscheideeinrichtung ( 12) zur Aufnahme der vom Boden des Behälters strömenden Mischung und zur Abscheidung der Schleifpartikel vom abgetragenen Material vorgesehen sind.

9. Vorrichtung zur Durchführung des Verfahrens aus Anspruch 1, **dadurch gekennzeichnet,** daß ein Satz Bürsten (20) einzeln angeordnet ist, um die Katalysatoroberflächen abzureiben und eine gegenläufige Bewegungseinrichtung (24) vorgesehen ist, um die Bürsten zur Durchführung der Behandlung mit den Katalysatoroberflächen derart in Kontakt zu bringen, daß das durch die Bürsten von den Katalysatoroberflächen abgetragene Material kontinuierlich aus der Behandlungszone ausscheidet.

EP 0 241 310 B1

Fig. 1.

ABRASIVE MATERIALS /
AIR BI-PHASE FLOW

4a

2

3

1

Fig. 2.

ABRASIVE MATERIALS /
AIR BI-PHASE FLOW

4b (4c)

2

3

1

Fig. 3.

4a

Fig. 4.

4b

*Fig. 5.*

4C

TREATING GAS

*Fig. 10.*

1

2

# Fig. 9.

# Fig. 6.

Fig. 7.

Fig. 8.

DUST

Fig. 11.

Fig. 12.

UNUSED CATALYST

Fig. 13.

DETERIORATED CATALYST

*Fig. 14.*

UNUSED CATALYST

AV: 25 Nm³/H·m²
MOLE RATIO 1.0

DENITRATION RATE

CATALYST REGENERATED
BY GRINDING

DETERIORATED CATALYST

80

70

60

50

320    340    360    380    400

TEMPERATURE (°C)

*Fig. 15.*

Si CONTENT
X-RAY MICROANALYZER COUNT

CATALYST REGENERATED
BY GRINDING

ABOUT 1300 μm

SCANNING